Europäisches Patentamt

European Patent Office

Office européen des brevets

(11) Numéro de publication: **0 382 639**

**A1**

## (12) DEMANDE DE BREVET EUROPEEN

(21) Numéro de dépôt: 90400340.7

(51) Int. Cl.5: **F16D 27/112**

(22) Date de dépôt: 07.02.90

(30) Priorité: 08.02.89 FR 8901631

(43) Date de publication de la demande:
16.08.90 Bulletin 90/33

(84) Etats contractants désignés:
AT BE CH DE DK ES GB GR IT LI LU NL SE

(71) Demandeur: WARNER FRANCE
Route de Spay, La Tunisie
F-72700 Allonnes(FR)

(72) Inventeur: Thebault, Jean-Pierre
"Bougeance" St. Pavace
72190 - Coulaines(FR)

(74) Mandataire: Durand, Yves Armand Louis et al
CABINET WEINSTEIN 20, Avenue de
Friedland
F-75008 Paris(FR)

(54) Embrayage électromagnétique.

(57) L'embrayage selon l'invention est caractérisé en ce qu'un moyen élastique de rappel (15) de l'armature (14) est fixé à la paroi latérale interne d'un carter de protection (2b), du côté des pôles (12, 13) de l'arbre d'entraînement (1) et est en arc-boutement sur l'armature (14).

_Fig. 1_

## Embrayage électromagnétique

La présente invention concerne un embrayage électromagnétique utilisé notamment dans le matériel bureautique, tel que par exemple les photocopieurs.

On connaît de tels embrayages électromagnétiques du type comprenant un arbre rotatif d'entraînement ; un ensemble inducteur fixe ; deux pôles annulaires respectivement extérieur et intérieur, magnétiquement conducteurs et solidaires de l'arbre d'entraînement ; un organe mené monté librement rotatif relativement à l'arbre d'entraînement en position débrayée ; une armature métallique solidaire en rotation de l'organe mené, susceptible d'être déplacée axialement relativement à celui-ci et solidarisée électromagnétiquement aux pôles de l'arbre d'entraînement à l'encontre de la force de rappel d'un moyen élastique lorsque la bobine de l'inducteur est alimentée, solidarisant ainsi l'organe mené à l'arbre d'entraînement. L'organe mené comprend un carter de protection recouvrant ou entourant les pôles du rotor et l'armature et le moyen élastique est adapté pour ramener l'armature en position inactive lorsque la bobine n'est plus alimentée.

Cependant, le moyen élastique de rappel généralement en forme d'anneau est solidarisé à l'organe mené par une soudure à ultra-sons, opération relativement délicate à réaliser, et est de plus solidarisé à la face arrière de l'armature opposée à celle susceptible de venir électromagnétiquement en contact avec les pôles de l'arbre d'entraînement par rivetage, opération également relativement délicate surtout si l'on considère la faible épaisseur de l'ordre de 0,1 mm, du moyen élastique de rappel.

La présente invention a pour but d'éliminer les inconvénients ci-dessus en proposant un embrayage électromagnétique, du type comprenant un arbre rotatif d'entraînement ; un ensemble inducteur fixe ; deux pôles annulaires concentriques respectivement extérieur et intérieur, magnétiquement conducteurs et solidaires de l'arbre d'entraînement ; un organe mené monté librement rotatif relativement à l'arbre d'entraînement en position débrayée ; une armature métallique solidaire en rotation de l'organe mené, susceptible d'être déplacée axialement relativement à l'organe mené et solidarisée électromagnétiquement aux pôles de l'arbre d'entraînement à l'encontre de la force de rappel d'un moyen élastique lorsque la bobine de l'inducteur est alimentée, solidarisant ainsi l'organe mené à l'arbre d'entraînement ; l'organe mené comprenant un carter de protection recouvrant les pôles du rotor et l'armature et le moyen élastique ramenant l'armature en position inactive lorsque la bobine n'est plus alimentée et caractérisé en ce que le moyen élastique de rappel de l'armature est fixé à la paroi latérale interne du carter de protection, du côté des pôles de l'arbre d'entraînement, et a une partie d'extrémité flexible en arc-boutement, en position embrayée, sur une zone périphérique correspondante de la paroi frontale de l'armature et située en dehors des pôles de l'arbre d'entraînement.

Selon une caractéristique de l'invention, le moyen élastique de rappel précité comprend une partie annulaire de fixation encastrée dans une gorge annulaire conjuguée de la paroi latérale interne précitée et à laquelle est raccordée la partie d'extrémité flexible précitée.

Selon une autre caractéristique de l'invention, le moyen élastique de rappel précité est constitué par plusieurs parties en forme de secteurs encastrées chacune dans une gorge en secteur conjuguée de la paroi latérale interne précitée et auxquelles sont raccordées respectivement des portions d'extrémité formant ensemble la partie d'extrémité flexible précitée.

Selon encore une autre caractéristique de l'invention, le moyen élastique est intégralement moulé au carter de protection.

Avantageusement, la partie d'extrémité flexible a une section transversale en forme de lunule.

De plus, la partie d'extrémité flexible maintient l'armature en position inactive au fond du carter de protection.

Par ailleurs, les deux pôles précités de l'arbre d'entraînement sont d'une conception leur permettant d'être très simplement solidarisés à l'arbre d'entraînement.

Ainsi, suivant un premier mode de réalisation, les deux pôles sont chacun en forme de bande cintrée en cercle avec leurs extrémités reliées l'une à l'autre de préférence par agrafage et les deux bandes cintrées sont disposées comme inserts dans un moule de l'arbre d'entraînement pour être solidaire de celui-ci lors du moulage par injection dudit arbre.

Avantageusement, chaque bande précitée comprend un certain nombre de trous d'ancrage de la bande dans la matière constituant l'arbre d'entraînement.

Selon un second mode de réalisation, les deux pôles sont chacun en forme de bande perforée et cintrée en cercle avec leurs extrémités reliées l'une à l'autre de préférence par agrafage, les deux bandes cintrées étant fixées respectivement sur deux portées périphériques correspondantes de l'arbre d'entraînement par l'intermédiaire de saillies solidaires des portées s'engageant respectivement dans les trous de la bande cintrée correspondante, la bande cintrée formant pôle intérieur étant logée sans jeu dans un espace annulaire correspondant de l'arbre d'entraînement.

La bande cintrée formant pôle intérieur comprend de plus un certain nombre de découpes radiales rectangulaires dans lesquelles s'engagent respectivement des saillies conjuguées intégralement moulées à la paroi cylindrique interne de la pièce annulaire définissant l'espace annulaire précité avec un collet de l'arbre d'entraînement.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention, et dans lesquels :

La figure 1 est une demi-vue en coupe longitudinale de l'embrayage électromagnétique conforme à l'invention.

La figure 2 est une vue en coupe suivant la ligne II-II de la figure 1.

La figure 3 est une vue partielle agrandie en coupe relative à une variante de réalisation de l'invention.

La figure 4 est une vue en perspective avec coupe suivant la ligne IV-IV de la figure 1 et relative à une autre variante de réalisation de l'invention.

La figure 5 est une vue de dessus d'une bande métallique constituant chaque pôle utilisé dans l'embrayage de la figure 1.

La figure 6 est une vue en coupe suivant la ligne VI-VI de la figure 5.

La figure 7 est une vue en perspective représentant un pôle assemblé de l'embrayage de la figure 1.

La figure 8 est une demi-vue en coupe longitudinale d'un deuxième mode de réalisation de l'embrayage électromagnétique de l'invention.

La figure 9 est une vue en coupe suivant la ligne IX-IX de la figure 8.

La figure 10 est une vue de dessus de la bande constituant le pôle extérieur utilisé dans l'embrayage de la figure 8.

La figure 11 est une vue en perspective représentant le pôle extérieur assemblé.

La figure 12 est une vue de dessus du pôle intérieur de la figure 8.

La figure 13 est une vue en perspective du pôle intérieur ; et

La figure 14 est une vue en perspective représentant une portion des pôles assemblés, suivant la flèche XIV de la figure 8.

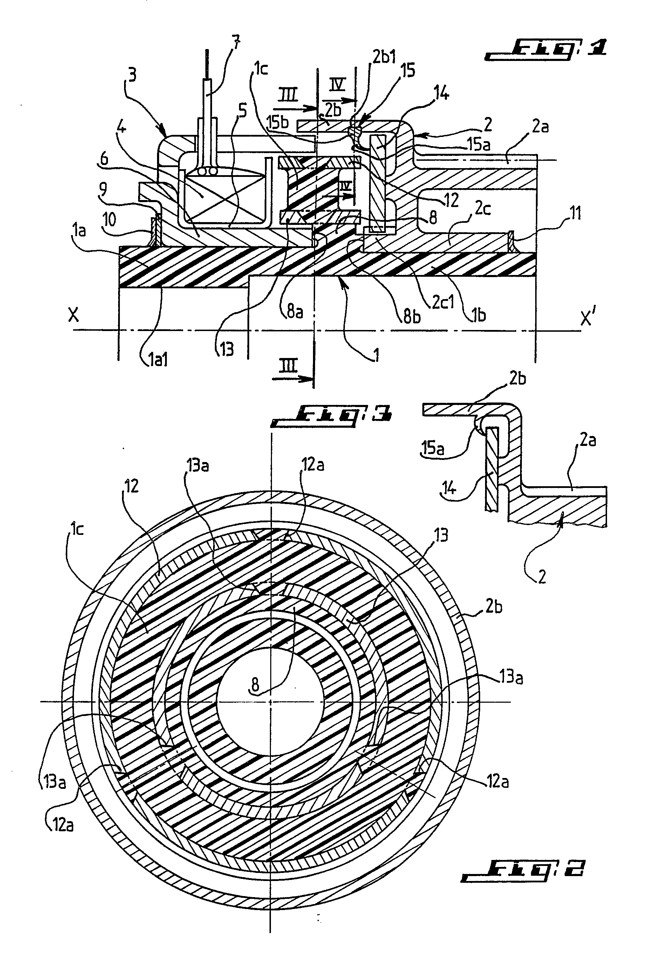

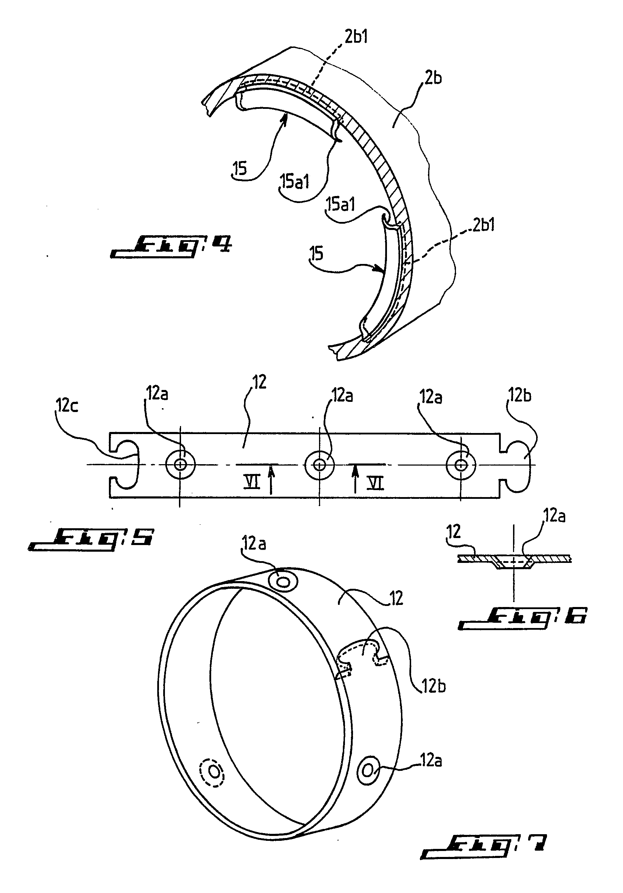

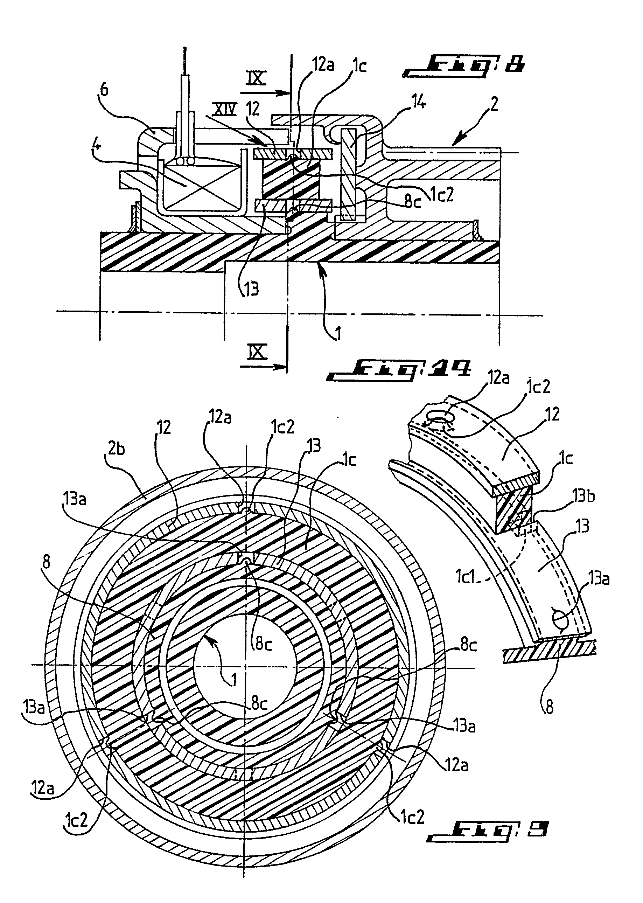

En se reportant aux figures 1 à 4, l'embrayage électromagnétique comprend un arbre d'entraînement ou rotor 1 monté rotatif autour de son axe longitudinal X-X′ et ayant une partie d'entrée 1a mécaniquement reliée à une source d'entraînement (non représentée) telle qu'un moteur électrique. Dans le cas présent, l'arbre 1 est percé axialement et la partie d'entrée 1a comporte en section transversale une face plane supérieure 1a1 coopérant avec un méplat conjugué de l'arbre de sortie du moteur électrique d'entraînement pour assurer l'accouplement mécanique, étant bien entendu que ce dernier peut être réalisé par tout autre moyen connu en soi. Un organe mené 2 est monté librement rotatif sur la partie de sortie 1b de l'arbre 1 coaxialement à l'axe X-X′, en position débrayée.

L'organe mené 2 est susceptible d'être complètement solidarisé à l'arbre 1 en position embrayée comme il sera expliqué ultérieurement. Un ensemble inducteur fixe 3 est monté sur l'arbre d'entraînement 1 coaxialement à celui-ci et comprend une bobine d'inducteur annulaire 4 logée dans une carcasse correspondante 5, la bobine 4 et la carcasse 5 étant renfermées dans une coquille métallique 6. Les fils 7 d'alimentation en énergie de la bobine 4 traversent une ouverture correspondante pratiquée dans la coquille 6 pour être reliée à une source d'alimentation extérieure (non représentée). Pour permettre à l'arbre 1 de tourner librement relativement à la coquille fixe 6 de l'ensemble inducteur 3, un film d'huile est déposé sur la partie cylindrique extérieure de la partie 1a de l'arbre 1 avant montage de la coquille 6 sur l'arbre 1. Bien entendu, à la place d'un film d'huile entre la coquille 6 et l'arbre 1, il est possible de prévoir par exemple une bague autolubrifiante. La coquille 6 est maintenue axialement sur l'arbre 1 par l'une de ses extrémités libres en appui sur une face radiale 8a d'un collet 8 de l'arbre 1 situé entre les deux parties d'entrée 1a et de sortie 1b de celui-ci et par son extrémité opposée en appui sur une rondelle de butée 9 montée coaxialement à la partie cylindrique d'entrée 1a de l'arbre 1 et elle-même maintenue axialement par un anneau d'autoblocage 10 fixé sur la circonférence de la partie d'entrée 1a. L'organe mené 2 est également maintenu axialement par l'une de ses extrémités libres en butée contre la face radiale 8b du collet 8, opposée à la face radiale 8a, et par son extrémité libre opposée en butée contre un anneau d'autoblocage 11 solidaire de la partie de sortie 1b de l'arbre 1. L'organe mené 2 comprend une couronne arrière 2a formant pignon de sortie s'engrenant avec un autre pignon (non représenté) d'un ensemble à entraîner.

L'embrayage électromagnétique comprend également deux pôles annulaires concentriques respectivement extérieur 12 et intérieur 13, magnétiquement conducteurs et solidaires de l'arbre d'entraînement 1. Plus précisément, le pôle annulaire intérieur 13 est fixé en partie sur le collet 8 et est séparé du pôle annulaire extérieur 12 par une pièce annulaire 1c de l'arbre d'entraînement 1, le pôle extérieur 12 étant fixé en partie sur la surface latérale cylindrique de la pièce intermédiaire 1c. Les pôles 12 et 13 sont logés en partie dans la coquille 6 à proximité de l'unité formée par la bobine 4 et la carcasse 5. Les extrémités annulaires respectivement des pôles 12 et 13, opposées à celles se trouvant dans la coquille 6, font face à une armature métallique magnétiquement conductrice 14 en forme de disque logée dans une partie avant formant carter de protection 2b de l'organe 2 recouvrant ou enveloppant également les pôles 12 et 13 pour ainsi protéger ces derniers et l'armature 14 notamment contre la poussière environnante. L'armature 14 peut se déplacer axialement relativement à l'organe mené 2 à l'encontre de la force de rappel d'un moyen élastique 15 et est liée en rotation à une partie 2c1 du moyeu 2c de l'organe 2, en butée contre la face 8b du collet 8, par l'intermédiaire de cannelures réalisées respectivement dans une ouverture centrale de l'armature 14 et sur la circonférence de la partie cylindrique 2c1. Comme autres moyens de liaison en rotation contre l'armature 14 et le moyeu 2b, il est également possible d'utiliser une liaison du type à six pans d'entraînement ou une liaison du type à carré d'entraînement.

Selon l'invention, le moyen élastique de rappel 15 de l'armature 14 est fixé à la paroi latérale interne du carter de protection 2b, du côté des pôles 12, 13 de l'arbre d'entraînement 1, et a une partie d'extrémité 15a flexible présentant en section transversale approximativement la forme d'une lunule. Le moyen élastique 15 maintient axialement l'armature 14 au fond du carter de protection 2b en position inactive de l'armature 14 correspondant à la position débrayée de l'embrayage. L'extrémité libre de la partie 15a est en appui, aux positions embrayée et débrayée de l'embrayage, sur une partie correspondante de la paroi frontale faisant face aux pôles 12 et 13 de l'armature 14 et située au voisinage de la périphérie de cette paroi en dehors des pôles de l'arbre d'entraînement 1. En d'autres termes, l'extrémité libre de la partie 15a est en contact avec une zone de plus grand diamètre de la face frontale du disque formant l'armature 14. A la position embrayée de l'embrayage à laquelle l'armature 14 est solidaire électromagnétiquement des pôles 12 et 13 de l'arbre 1, le moyen élastique 15 est en arc-boutement sur la partie correspondante de la paroi frontale de l'armature 14 de façon à pouvoir ramener l'armature en position inactive lorsque la bobine 4 n'est plus alimentée.

Suivant un mode de réalisation, le moyen élastique de rappel 15, comme représenté en figure 1, comprend une partie annulaire de fixation 15b du moyen 15 au carter de protection 2b et encastrée dans une gorge annulaire de forme conjuguée 2b1 de la paroi latérale interne du carter 2b, la partie d'extrémité flexible 15a étant raccordée à la partie annulaire 15b. De préférence, les parties 15a et 15b sont réalisées en une seule pièce.

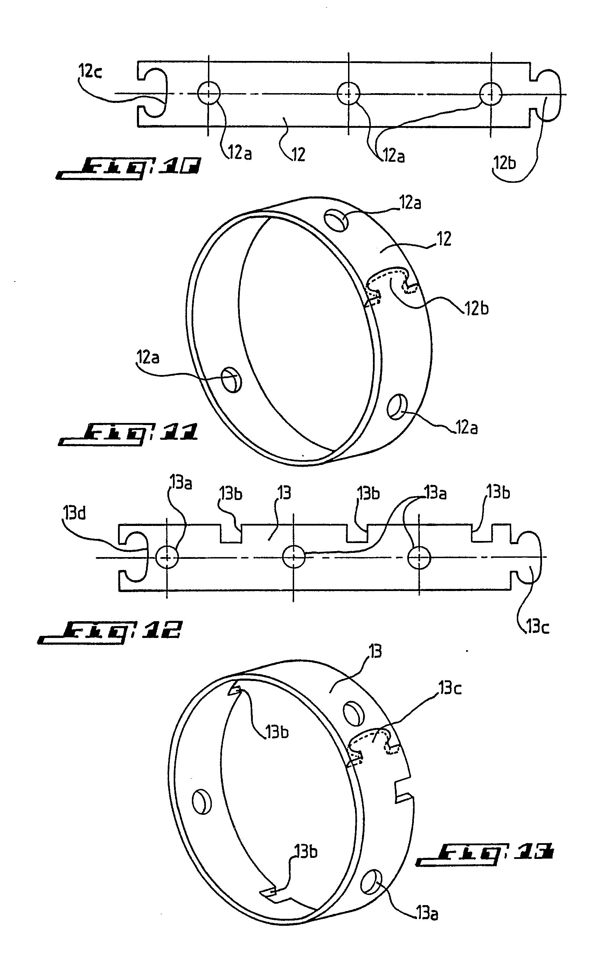

Suivant un autre mode de réalisation, le moyen élastique 15 est constitué par plusieurs parties en forme de secteur, dont deux sont représentées à titre d'exemple à la figure 4, et encastrées chacune dans une gorge 2b1 en secteur de forme conjuguée de la paroi latérale interne du carter 2b et auxquelles sont raccordées respectivement des portions d'extrémités 15a1 formant ensemble la partie d'extrémité flexible 15a.

Avantageusement, le moyen élastique 15, qu'il soit réalisé comme représenté à la figure 1 ou en figure 4, est intégralement moulé au carter de protection 2b.

En référence aux figures 5 à 7, il va être décrit la façon dont sont réalisés chacun des pôles extérieur 12 et intérieur 13, seul le pôle extérieur 12 étant représenté, étant bien entendu que le pôle extérieur 13 présente une configuration générale identique mis à part les différences de dimensionnement dûes au différences de circonférence.

Le pôle 12 est réalisé à partir d'une bande métallique comportant suivant son axe longitudinal un certain nombre de trous emboutis 12a ayant chacun une forme approximativement tronconique saillante de la surface inférieure de la bande définissant la face annulaire interne du pôle 12. La bande formant le pôle 12 comprend à ses deux extrémités respectivement une languette 12b, par exemple en clé de violon, et une découpe 12c de forme conjuguée à la languette 12b. Le pôle 12 est obtenu par cintrage en cercle de la bande métallique et agrafant ensemble les deux extrémités 12b et 12c. Les deux pôles 12, 13 ainsi réalisés sont ensuite disposés concentriquement comme inserts dans le moule de l'arbre d'entraînement 1 avant injection complète de la matière constituant cet arbre de façon qu'après injection de la matière les pôles 12 et 13 soit rigidement solidaires de l'arbre 1. Plus précisément, lors de l'injection de la matière de l'arbre 1, celle-ci remplit l'espace annulaire entre les deux pôles 12 et 13 ainsi que les trous tronconiques 12a de façon que la forme tronconique extérieure définie par ces trous soit ancrée dans la matière de l'arbre 1.

L'arbre d'entraînement 1 peut être réalisé à partir d'une matière plastique appropriée ou est en aluminium extrudé. Par ailleurs, le moyen élastique 15 formant ressort annulaire ou sectoriel peut être en une matière plastique, en caoutchouc ou en acier.

Les figures 8 à 14 représentent une autre forme de réalisation des pôles 12 et 13 et de leur assemblage à l'arbre d'entraînement 1 en une matière identique à celle de l'arbre des figures précédentes.

Le pôle extérieur 12 représenté aux figures 10 et 11 comprend plusieurs trous 12a percés à travers la bande métallique formant le pôle suivant l'axe longitudinal de celle-ci. Cette bande comprend à ses deux extrémités respectivement une languette par exemple en clé de violon 12b et une découpe 12c de forme conjuguée à la languette 12b de façon à être reliées ensemble comme par agrafage après cintrage en cercle de la bande pour former le pôle annulaire 12.

Le pôle intérieur 13 est également réalisé à partir d'une bande métallique représentée en figure 12 comprenant un certain nombre de trous perforés 13a suivant l'axe longitudinal de la bande ainsi qu'un certain nombre de découpes rectangulaires 13b ou découpes radiales réalisées perpendiculairement à l'axe longitudinal de la bande. La bande formant le pôle 13 comprend également à ses extrémités respectivement une languette 13c en clé de violon et une découpe 13d de forme conjuguée de façon à être reliées entre elles comme par agrafage pour former le pôle annulaire 13 après centrage en cercle de la bande, comme représenté en figure 13.

L'assemblage et la solidarisation des pôles 12 et 13 à l'arbre 1 s'effectuent comme suit. Le pôle intérieur 13 est introduit dans l'espace annulaire correspondant formé entre la pièce intermédiaire 1c et le collet 8 de l'arbre d'entraînement 1 de façon que des saillies 1c1 solidaires par moulage de la paroi annulaire interne de la pièce 1c lors du moulage de celle-ci et de forme conjuguée aux découpes 13b, s'engagent respectivement dans ces découpes et que des bossages 8c solidaires par moulage du collet 8 de l'arbre 1 régulièrement espacés sur la surface latérale cylindrique du collet 8 s'engagent respectivement dans les trous 13a. Le pôle 13 se trouve ainsi solidarisé au collet 8 et à la pièce annulaire 1c en étant disposé pratiquement sans jeu dans l'espace annulaire défini entre la pièce 1c et le collet 8.

Le pôle 12 est ensuite fixé sur la surface latérale cylindrique externe de la pièce 1c en engageant par encliquetage des bossages 1c2, solidaires par moulage de la surface latérale extérieure de la pièce 1c et régulièrement espacés circonférentiellement, respectivement dans les trous 12a.

Le fonctionnement de l'embrayage électromagnétique tel que représenté notamment aux figures 1 et 8 ressort déjà de la description qui en a été faite ci-dessus et va être maintenant brièvement détaillé.

Lorsque la bobine 4 est alimentée, les pôles 12 et 13 attirent électromagnétiquement l'armature 14 qui se colle alors aux deux pôles de façon à y être solidarisée. L'organe mené 2 se trouve ainsi complétement solidarisé à l'arbre d'entraînement 1 par l'intermédiaire de l'armature 14, ce qui correspond à la position embrayée de l'embrayage. Quand la bobine 4 n'est plus alimentée, le moyen élastique 15 permet à l'armature 14 de se décoller des pôles 12 et 13 de l'arbre 1 et permet donc l'obtention du débrayage complet de l'embrayage de l'invention.

L'embrayage de l'invention ci-dessus décrit est relativement facile à réaliser relativement aux embrayages électromagnétiques connus jusqu'à maintenant puisqu'il ne nécessite pas d'opération d'assemblage supplémentaire, telle que soudage de pièces et n'exige pas de tolérances de fabrication rigoureuses.

**Revendications**

1. Embrayage électromagnétique du type comprenant un arbre rotatif d'entraînement (1) ; un ensemble inducteur fixe (3) ; deux pôles annulaires concentriques respectivement extérieur (12) et intérieur (13), magnétiquement conducteurs et solidaires de l'arbre d'entraînement (1) ; un organe mené (2) monté rotatif relativement à l'arbre d'entraînement (1) en position débrayée ; une armature métallique (14) solidaire en rotation de l'organe mené (2), susceptible d'être déplacée axialement relativement à l'organe mené (2) et solidarisée électromagnétiquement aux pôles (12, 13) de l'arbre d'entraînement (1) à l'encontre de la force de rappel d'un moyen élastique (15) lorsque la bobine (4) de l'ensemble inducteur (3) est alimentée, solidarisant ainsi l'organe mené (2) à l'arbre d'entraînement (1) ; l'organe mené (2) comprenant un carter de protection (2b) recouvrant les pôles (12, 13) de l'arbre (1) et l'armature (14) et le moyen élastique (15) ramenant l'armature (14) en position inactive lorsque la bobine (4) n'est plus alimentée ; caractérisé en ce que le moyen élastique de rappel (15) de l'armature (14) est fixé à la paroi latérale interne du carter de protection (2b), du côté des pôles (12, 13) de l'arbre d'entraînement (1), et a une partie d'extrémité flexible (15a) en arc-boutement sur une partie correspondante de la paroi frontale de l'armature (14) située au voisinage de la périphérie de la paroi frontale en dehors des pôles (12, 13) de l'arbre d'entraînement (1).

2. Embrayage selon la revendication 1, caractérisé en ce que le moyen élastique de rappel (15) précité comprend une partie annulaire de fixation (15b) encastrée dans une gorge annulaire conjuguée (2b1) de la paroi latérale interne précitée et à laquelle est raccordée la partie d'extrémité flexible (15a) précitée.

3. Embrayage selon la revendication 1, caractérisé en ce que le moyen élastique de rappel (15) précité est constitué par plusieurs parties en forme de secteurs encastrées chacune dans une gorge en secteur conjuguée de la paroi latérale interne précitée et auxquelles sont raccordées respectivement des portions d'extrémité formant ensemble la partie d'extrémité flexible (15a) précitée.

4. Embrayage selon la revendication 1, caractérisé en ce que le moyen élastique (15) précité est intégralement moulé au carter de protection (2b) précité.

5. Embrayage selon l'une des revendications précédentes, caractérisé en ce que la partie d'extrémité (15a) précitée a une section transversale en forme de lunule.

6. Embrayage selon l'une des revendications précédentes, caractérisé en ce que la partie d'extrémité (15a) précitée maintient l'armature (14) en position inactive au fond du carter de protection (2a).

7. Embrayage selon l'une des revendications précédentes, caractérisé en ce que les deux pôles (12, 13) précités sont chacun en forme de bande cintrée en cercle avec leurs extrémités reliées l'une à l'autre, de préférence par agrafage, et disposées comme insert dans un moule de l'arbre d'entraînement (1) pour être solidaire de ce dernier lors du moulage par injection dudit arbre.

8. Embrayage selon la revendication 7, caractérisé en ce que chaque bande précitée comprend un certain nombre de trous emboutis (12a, 13a) d'ancrage de la bande dans la matière constituant l'arbre d'entraînement (1).

9. Embrayage selon l'une des revendications 1 à 6, caractérisé en ce que les deux pôles (12, 13) précités sont chacun en forme de bande perforée cintrée en cercle avec leurs extrémités reliés l'une à l'autre de préférence par agrafage, les deux bandes cintrées étant fixées respectivement sur deux portées périphériques correspondantes de l'arbre d'entraînement (1) par l'intermédiaire de bossages (1c2, 8c) solidaires des portées s'engageant respectivement dans les trous (12a, 13a) de la bande cintrée correspondante, la bande cintrée formant pôle intérieur (13) étant logée sans jeu dans un espace annulaire correspondant de l'arbre d'entraînement (1).

10. Embrayage selon la revendication 9, caractérisé en ce que la bande cintrée formant pôle intérieur (13) comprend un certain nombre de découpes radiales rectangulaires (13b) dans lesquelles s'engagent respectivement des saillies conjuguées (1c1), intégralement moulées à la paroi annulaire interne de la pièce annulaire (1c) définissant l'espace annulaire précité avec un collet (8) de l'arbre d'entraînement (1).

Fig. 1

Fig. 3

Fig. 2

Fig. 4

Fig. 5

Fig. 6

Fig. 7

Fig. 8

Fig. 14

Fig. 9

_Fig. 10_

_Fig. 11_

_Fig. 12_

_Fig. 13_

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 322 249 (KLINKENBERG) <br> * En entier * <br> --- | 1,7 | F 16 D 27/112 |
| A | EP-A-0 065 923 (NISSAN) <br> * En entier * <br> --- | 1,2 | |
| A | FR-A-2 533 282 (THERMO) <br> * En entier * <br> ----- | 1 | |

**DOMAINES TECHNIQUES RECHERCHES (Int. Cl.5)**

F 16 D 27/00

Le présent rapport a été établi pour toutes les revendications

| Lieu de la recherche | Date d'achèvement de la recherche | Examinateur |
|---|---|---|
| LA HAYE | 19-04-1990 | BALDWIN D.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................
& : membre de la même famille, document correspondant

EPO FORM 1503 03.82 (P0402)